# EUROPÄISCHE PATENTSCHRIFT

(11) **EP 0 640 566 B1**
(45) Veröffentlichungstag und Bekanntmachung des Hinweises auf die Patenterteilung: **28.04.1999**
(21) Anmeldenummer: 94112692.2
(22) Anmeldetag: 13.08.1994
(51) Int. Cl.: C01G 31/00, C09C 1/00

(54) **Bismutvanadatpigmente**
Bismuth vanadate pigments
Pigments à base de vanadate de bismuth

(30) Priorität: 24.08.1993 DE 4328412
(43) Veröffentlichungstag der Anmeldung: 01.03.1995
(73) Patentinhaber: BASF Coatings Aktiengesellschaft, 48165 Münster (DE)
(72) Erfinder: Etzrodt, Guenter, Dr., D-70180 Stuttgart (DE); Knittel, Helmut, Dr., D-71634 Ludwigsburg (DE); Reisacher, Hansulrich, Dr., D-74343 Sachsenheim (DE)
(74) Vertreter: Karau, Wolfgang, Dr.

(56) Entgegenhaltungen:
- EP-A- 0 441 101
- WO-A-92/11205
- WO-A-94/01497

## Beschreibung

Die vorliegende Erfindung betrifft neue Bismutvanadatpigmente der allgemeinen Formel I

BiₓEᵥSi_{y}V_{(1-z)}P_{z}O_{w} I

- x: 0,8 bis 1,2;
- y: 0 bis 4;
- z: 0 bis 0,2;
- v: >0 bis 0,5;
- w: Zahl der Sauerstoffatome zur Erfüllung der Valenzerfordernisse der Kationen,
mit folgenden Maßgaben:
a) wenn y=0 ist, bedeuten
   z >0 bis <0,05 und
   E Calcium oder eine Mischung von Calcium und Zink und/oder Magnesium, in der das Molverhältnis von Calcium zu Zink und/oder Magnesium ≥ 1 ist;
b) wenn 0<y<1 ist, bedeuten
   z 0 bis 0,2 und
   E Calcium oder eine Mischung von Calcium und Zink und/oder Magnesium, in der das Molverhältnis von Calcium zu Zink und/oder Magnesium ≥ 1 ist;
c) wenn y≥1 ist, bedeuten
   z 0 bis 0,2 und
   E Zink, Magnesium, Calcium, Lithium, Aluminium oder Mischungen davon.

Weiterhin betrifft die Erfindung die Herstellung dieser Pigmente und ihre Verwendung zum Einfärben von Lacken, Druckfarben und Kunststoffen.

Bismutvanadat stellt ein interessantes nichttoxisches Gelbpigment insbesondere für die Einfärbung von Lacken und Kunststoffen dar. Zur Verbesserung der Anwendungseigenschaften, vor allem der thermischen Stabilität und der Beständigkeit gegen Chemikalien, enthalten die Pigmente in der Regel Dotierungsmittel wie Erdalkali-, Zink-, Aluminium-, Phosphat- und Silikationen (DE-A-27 27 865, DE-A-29 40 185, DE-A- 42 00 925, EP-A-441 101 und WO-A-92/11205) oder sie werden nachträglich mit Schutzhüllen aus Silikaten, Phosphaten oder Metalloxiden versehen (DE-A-27 27 864, DE-A-31 35 281 und DE-A-40 37 878).

Die bekannten Pigmente können jedoch die coloristischen und anwendungstechnischen Anforderungen nicht vollständig befriedigen.

Der Erfindung lag daher die Aufgabe zugrunde, Bismutvanadatpigmente bereitzustellen, die sich durch gute Eigenschaften auszeichnen und die vorteilhaft für die genannten Anwendungszwecke eingesetzt werden können.

Demgemäß wurden die eingangs definierten Bismutvanadatpigmente gefunden.

Außerdem wurde ein Verfahren zur Herstellung dieser Pigmente durch Vermischen bismut- und vanadiumhaltiger Lösungen und anschließende Temperaturbehandlung des gebildeten Niederschlags gefunden, welches dadurch gekennzeichnet ist, daß man eine alkalische Vanadatlösung unter Rühren mit einer sauren Bismutsalzlösung in Gegenwart löslicher Salze der Metalle Calcium, Zink, Magnesium, Lithium und/oder Aluminium und gegebenenfalls eines löslichen Phosphats und/oder Silikats versetzt, mit einer Base den pH-Wert der Mischung auf 3 bis 6,5 einstellt, den pH-Wert durch weitere Zugabe von Base während des Erhitzens auf bis zu 100°C konstant hält, bis er nicht mehr absinkt, dann die Mischung solange bei dieser Temperatur rührt, bis der pH-Wert von sich aus konstant bleibt, anschließend das ausgefällte Pigment isoliert, salzfrei wäscht, trocknet und 0,5 bis 5 Stunden bei 300 bis 700°C tempert.

Weiterhin wurde die Verwendung dieser Pigmente zur Einfärbung von Lacken, Druckfarben und Kunststoffen gefunden.

Die erfindungsgemäßen Bismutvanadatpigmente weisen die Zusammensetzung

BiₓEᵥSi_{y}V_{(1-z)}P_{z}O_{w} I

auf, wobei die Variablen folgende Bedeutung haben:
- x: 0,8 bis 1,2, vorzugsweise 0,9 bis 1,1;
- y: 0 bis 4, vorzugsweise 0 bis 2;
- z: 0 bis 0,2, vorzugsweise 0 bis 0,1;
- v: >0 bis 0,5, vorzugsweise 0,01 bis 0,1;
- w: steht für die Anzahl der Sauerstoffatome zur Erfüllung der Valenzerfordernisse der Kationen.

Dabei gelten folgende Maßgaben:
a) Wenn y=0 ist, d.h. bei Zusammensetzungen BiₓEᵥV_{(1-z)}P_{z}O_{w}, bedeutet z>0 bis <0,05, bevorzugt 0,002 bis 0,03. E steht in diesem Fall für Calcium oder eine Mischung von Calcium und Zink und/oder Magnesium, in der das Molverhältnis von Calcium zu Zink und/oder Magnesium ≥ 1 ist.
b) Wenn 0<y<1 ist, bedeutet z 0 bis 0,2, bevorzugt 0 bis 0,1. E hat die gleiche Bedeutung wie in Fall a).
c) Wenn y≥1 ist, bedeutet z 0 bis 0,2, bevorzugt 0,01 bis 0,1. E steht für Zink, Magnesium, Calcium, Lithium, Aluminium oder Mischungen davon, vorzugsweise für Zink.

In Abhängigkeit von der Herstellung kann die Zusammensetzung der Pigmentteilchen von außen nach innen unterschiedlich sein. Die angegebene Formel ist daher als eine über das ganze Pigment gemittelte Zusammensetzung zu sehen.

Die erfindungsgemäßen Bismutvanadatpigmente I zeichnen sich durch hervorragende Eigenschaften aus. Sie haben ein Chroma (C*) von ≥ 90, eine Helligkeit (L*) von ≥ 82 und einen Farbwinkel (Hue) von 89 bis 95°. Sie zeigen eine Photochromie mit einem dE-Wert von ≤ 1 (CIELAB) sowie eine Temperaturstabilität dE von ≤ 3 (CIELAB), wobei insbesondere die siliciumhaltigen Pigmente I (y>0, vor allem y>1) hervorzuheben sind.

Die im CIELAB-System verwendeten Begriffe Chroma, Helligkeit und Farbwinkel sind hinlänglich aus der Literatur bekannt, s. z.B. Hans G. Völz, Weinheim (1990) und R.W.G. Hunt, Measuring Colour, Ellis Horwood Limited, West Sussex (1987).

Unter Photochromie wird die durch sichtbares oder ultraviolettes Licht hervorgerufene, reversible Umwandlung eines Stoffes in einen anderen, der sich von dem Ausgangsstoff durch seine Farbe (Absorptionsspektrum) unterscheidet, verstanden (s. Römpps Chemie-Lexikon, 9. Auflage, Band 4 (1985)). Der dE-Wert bedeutet dabei die gesamte coloristische Abweichung.

Die thermische Stabilität ergibt sich analog aus der Größe der Veränderung eines Stoffes unter Wärmeeinfluß bei der Einarbeitung in Kunststoffe (z.B. Polyethylen und artverwandte Polymere, Messung bei 180°C und 260°C). Dem dE-Wert entspricht wieder die gesamte coloristische Abweichung.

Die Herstellung der Bismutvanadatpigmente I kann vorteilhaft nach dem erfindungsgemäßen zweistufigen Verfahren erfolgen, indem man das Pigment zunächst durch Vermischen entsprechender Precursorlösungen in Gegenwart der gewünschten Dotierungsmittel bei geeignetem pH-Wert ausfällt und anschließend einer Temperaturbehandlung unterzieht.

Verfahrenstechnisch kann man wie folgt vorgehen: Man versetzt eine alkalische Vanadatlösung, der gewünschtenfalls lösliches Phosphat zugesetzt ist, mit einer sauren Bismutsalzlösung, welche die gewünschten Dotierungsmittel als lösliche Salze enthält. Den pH-Wert der Mischung stellt man dann mit einer Base auf einen Wert von in der Regel 3 bis 6,5 ein und hält ihn durch weitere Basenzugabe während des Erhitzens bis auf zu 100°C konstant (in der Regel auf 4,5 bis 5,5), bis er nicht mehr absinkt. Anschließend rührt man die Mischung solange weiter bei dieser Temperatur, bis der pH-Wert, der anfängt zu steigen, von sich aus konstant bleibt. Dies dauert in der Regel 0,5 bis 5 h.

Man kann jedoch die gelösten Dotierungsmittel auch stufenweise der Reaktionsmischung zugeben. Diese Vorgehensweise ist besonders vorteilhaft für die Dotierung mit Silicium. Dabei ist es besonders günstig, der Reaktionsmischung weitere Silikatlösung zuzusetzen, nachdem sich der pH-Wert auf einen Wert von 7,5 bis 10 stabilisiert hat.

Für die Fällungsreaktion werden vorteilhaft z.B. die folgenden Ausgangsverbindungen eingesetzt:
- Ammonium- und Alkalimetall-, insbesondere Kalium- und Natriumvanadat;
- Alkalimetallphosphate und -hydrogenphosphate, insbesondere Kalium- und Natriumphosphat, sowie Phosphorsäure;
- Bismutnitrat;
- Calcium-, Magnesium-, Zink-, Lithium-, Aluminiumnitrat, -chlorid und -sulfat.
- Wasserglas sowie Hexafluorokieselsäure und deren Salze wie Zinkhexafluorosilikat;
- als Basen vor allem Alkalimetallhydroxide wie Kalium- und vor allem Natriumhydroxid.

Üblicherweise wird das ausgefällte Pigment dann abfiltriert, salzfrei gewaschen und getrocknet.

Anschließend wird das getrocknete Pigment noch bei 300 bis 700°C, vorzugsweise 400 bis 500°C, getempert. Diese Temperaturbehandlung dauert im allgemeinen 0,5 bis 5 h.

Gewünschtenfalls können die erfindungsgemäßen Bismutvanadatpigmente zur weiteren Verbesserung der thermischen Stabilität sowie der Beständigkeit gegen Chemikalien noch einer der oben genannten Stabilisierungsbehandlungen unterzogen werden (z.B. Beschichten mit Silikaten, Phosphaten oder Metalloxiden). In der Regel sind insbesondere die siliciumhaltigen erfindungsgemäßen Bismutvanadatpigmente auch ohne nachträgliche Beschichtung bereits ausreichend thermisch stabil.

Die erfindungsgemäßen Pigmente eignen sich vorteilhaft zum Einfärben von Lacken, Druckfarben und Kunststoffen.

### Beispiele

### Herstellung und Beurteilung von erfindungsgemäßen Bismutvanadatpigmenten

Zur Beurteilung der coloristischen Eigenschaften und der Photochromie wurden Lackierungen untersucht, die folgendermaßen hergestellt wurden: Eine Mischung aus 20 g des jeweiligen Pigments und 80 g Alkyd-Melamin-Einbrennlack (45 Gew.-% Festkörperanteil) wurde mit 150 g Glaskugeln (3 mm Durchmesser) 60 min mit einem Skandexgerät geschüttelt, dann auf Aluminium-Q-Panels deckend appliziert (Spritzverfahren) und bei 130°C 30 min eingebrannt.

Zur Bestimmung der CIELAB-Werte Farbwinkel (Hue[°]), Chroma C* und Helligkeit L* wurden die erhaltenen Lackierungen mit einem Zeiss-Spektralphotometer RFC 16 vermessen.

Zur Beurteilung der Photochromie wurden die Lackierungen jeweils zur Hälfte mit einer Blechblende abgedeckt und dann 3 h mit einem 1000 Watt-Flutlichtstrahler (Sylvania, 1000 W Halogenlampe, Code-Nr. 216259; 45 cm Belichtungsabstand) bestrahlt. Die dE-Werte wurden durch direkt anschließende, vergleichende Vermessung des belichteten und des unbelichteten Teils der Lackierungen mit dem o.g. Spektralphotometer ermittelt (Differenz der Mittelwerte aus jeweils drei Messungen).

Zur Beurteilung der thermischen Stabilität der Pigmente wurde eine Mischung aus 99 Gew.-% HD-Polyethylen (Lupolen® 6031 M BASF) und 1 Gew.-% des jeweiligen Pigments bei einer Temperatur von a) 180°C und b) 260°C extrudiert und so in eine Form (60 mm Länge, 45 mm Breite, 2 mm Höhe) gespritzt, daß eine gleichmäßige Oberfläche entstand. Die bei 180 und 260°C hergestellten Proben wurden dann zur Ermittlung der Farbtonreinheit und der gesamten Coloristik mit dem o.g. Spektralphotometer vermessen (Bestimmung von dC*- und dE-Wert). Je kleiner die dC*- und dE-Werte sind, je kleiner also die Unterschiede der Proben bei den beiden Temperaturen sind, umso temperaturstabiler ist das Pigment.

### Beispiele 1 bis 7

Zu einer Mischung aus 209,1 ml wäßriger Natriumvanadatlösung mit einem Gehalt von 79,92 g Vanadin/l (≙ 16,7 g Vanadin), 500 ml Wasser und a g 85 gew.-%iger Phosphorsäure wurden unter Rühren in 40 min 621,7 g Bismutnitratlösung mit einem Gehalt von 11,05 Gew.-% Bismut (≙ 68,7 g Bismut) und 6 Gew.-% Salpetersäure, in der b g Calciumnitrat (Ca(NO₃)₂·4H₂O), c g Zinknitrat (Zn(NO₃)₂·6H₂O) und d g Natronwasserglas (28 Gew.-% SiO₂), das mit Wasser 1:10 verdünnt war, gelöst waren, gegeben.

Der pH-Wert der Mischung wurde dann mit 30 gew.-%iger Natronlauge in 1 h auf 4,5 und anschließend mit 5 gew.-%iger Natronlauge in 10 min auf 5 eingestellt.

Danach wurde die entstandene, hellbraune Suspension unter Einhaltung des pH-Wertes 5 durch weitere Zugabe von Natronlauge auf 95°C erhitzt. Nach ca. 1 h färbte sich die Suspension gelb, und der pH-Wert stieg auf 7,6. Die Suspension wurde bis zur pH-Konstanz bei 95°C gerührt.

Das Pigment wurde abfiltriert, salzfrei gewaschen, bei 110°C getrocknet und anschließend noch 30 min bei 400°C getempert.

Einzelheiten zu diesen Versuchen sowie die Ergebnisse der coloristischen Untersuchungen sind Tabelle 1 zu entnehmen.

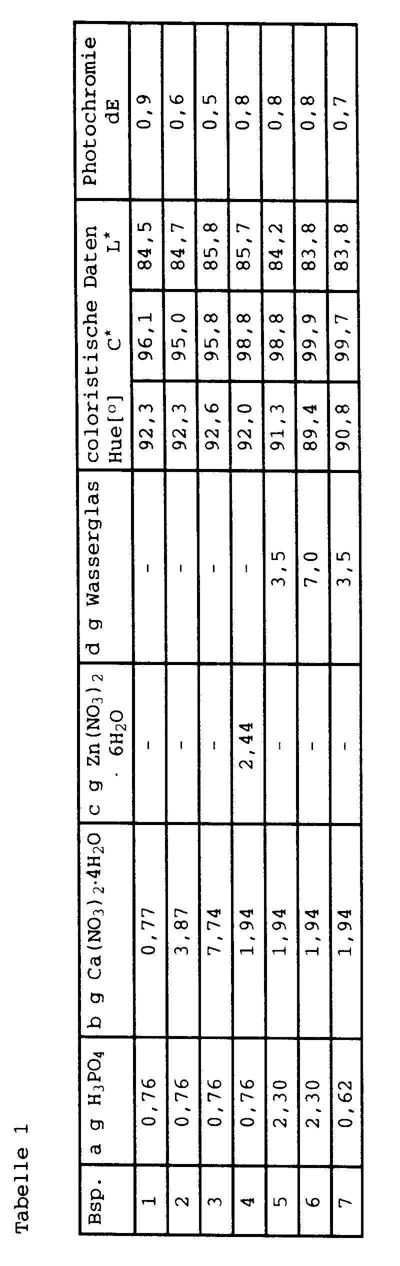

### Beispiele 8 und 9

Zu einer Mischung aus 261,3 g einer Natriumvanadatlösung mit einem Gehalt von 7,08 Gew.-% Vanadin (≙ 18,5 g Vanadin; Dichte 1,183 g/l; pH-Wert 9,4), 300 ml Wasser und 2,5 g 85 gew.-%iger Phosphorsäure wurde unter Rühren in 60 min eine Mischung aus 309 g Bismutnitratlösung mit einem Gehalt von 24,26 Gew.-% Bismut (≙ 75 g Bismut; Dichte 1,661 g/l), 600 ml Wasser, a g 53 gew.-%ige Salpetersäure und b g Natronwasserglas (28 Gew.-% SiO₂) gegeben.

Der pH-Wert der Mischung wurde mit c g 25 gew.-%iger Natronlauge auf 5,6 eingestellt. Dann wurde die entstandene, hellbraune Suspension unter Einhaltung dieses pH-Wertes durch Zugabe von 5 gew.-%iger Natronlauge auf 95°C erhitzt. Nach ca. 1 h färbte sich die Suspension gelb. Nach der Stabilisierung des pH-Wertes auf 8,0 ± 0,3 wurden d₁ g Zinkhexafluorosilikat ("ZHFS"; Zn(SiF₆)·6H₂O), gelöst in e₁ g Wasser, zugegeben, wobei der pH-Wert durch Zugabe von f g 25 gew.-%iger Natronlauge bei 7,5 gehalten wurde.

Die Suspension wurde auf eine Leitfähigkeit < 1000 µS gewaschen, auf ein Volumen von 1300 ml gebracht und auf 85°C erhitzt. Dann wurde in 3 h eine Lösung aus 75 g Natronwasserglas (28 Gew.-% SiO₂) und 600 ml Wasser zugegeben, wobei der pH-Wert durch Zusatz von 13 ml 53 gew.-%iger Salpetersäure in 130 ml Wasser bei 8,5 gehalten wurde. Anschließend wurden d₂ g Zinkhexafluorosilikat, gelöst in e₂ g Wasser, zugegeben, wobei der pH-Wert erneut durch Zugabe von f g 25 gew.-%iger Natronlauge bei 8 gehalten wurde.

Das Pigment wurde abfiltriert, salzfrei gewaschen, getrocknet und anschließend 1 h bei 450°C getempert.

Einzelheiten zu diesen Versuchen sowie die Ergebnisse der coloristischen Untersuchungen sind in Tabelle 2 aufgeführt.

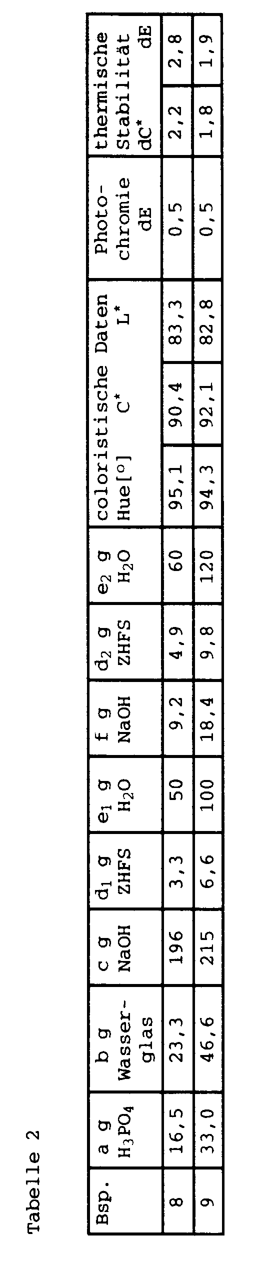

## Patentansprüche

1. Bismutvanadatpigmente der allgemeinen Formel I
BiₓEᵥSi_{y}V_{(1-z)}P_{z}O_{w} I
x 0,8 bis 1,2;
y 0 bis 4;
z 0 bis 0,2;
v >0 bis 0,5;
w Zahl der Sauerstoffatome zur Erfüllung der Valenzerfordernisse der Kationen,
mit folgenden Maßgaben:
a) wenn y=0 ist, bedeuten
z >0 bis <0,05 und
E Calcium oder eine Mischung von Calcium und Zink und/oder Magnesium, in der das Molverhältnis von Calcium zu Zink und/oder Magnesium ≥ 1 ist;
b) wenn 0<y<1 ist, bedeuten
z 0 bis 0,2 und
E Calcium oder eine Mischung von Calcium und Zink und/oder Magnesium, in der das Molverhältnis von Calcium zu Zink und/oder Magnesium ≥ 1 ist;
c) wenn y≥1 ist, bedeuten
z 0 bis 0,2 und
E Zink, Magnesium, Calcium, Lithium, Aluminium oder Mischungen davon.

2. Bismutvanadatpigmente der Formel I nach Anspruch 1, in der die Variablen folgende Bedeutung haben:
x 0,9 bis 1,1;
y 0 bis 2;
z 0 bis 0,1;
v 0,01 bis 0,1;
w Zahl der Sauerstoffatome zur Erfüllung der Valenzerfordernisse der Kationen,
mit folgenden Maßgaben:
a) wenn y=0 ist, bedeutet
z 0,002 bis 0,05;
b) wenn 0<y<1 ist, bedeutet
z 0 bis 0,1;
c) wenn y>1 ist, bedeuten
z 0,01 bis 0,1 und
E Zink.

3. Verfahren zur Herstellung von Bismutvanadatpigmenten der Formel I gemäß Anspruch 1 durch Vermischen bismut- und vanadiumhaltiger Lösungen und anschließende Temperaturbehandlung des gebildeten Niederschlags, dadurch gekennzeichnet, daß man eine alkalische Vanadatlösung unter Rühren mit einer sauren Bismutsalzlösung in Gegenwart löslicher Salze der Metalle Calcium, Zink, Magnesium, Lithium und/oder Aluminium und gegebenenfalls eines löslichen Phosphats und/oder Silikats versetzt, mit einer Base den pH-Wert der Mischung auf 3 bis 6,5 einstellt, den pH-Wert durch weitere Zugabe von Base während des Erhitzens auf bis zu 100°C konstant hält, bis er nicht mehr absinkt, dann die Mischung solange bei dieser Temperatur rührt, bis der pH-Wert von sich aus konstant bleibt, anschließend das ausgefällte Pigment isoliert, salzfrei wäscht, trocknet und 0,5 bis 5 Stunden bei 300 bis 700°C tempert.

4. Verfahren nach Anspruch 3, dadurch gekennzeichnet, daß man das lösliche Silikat der Reaktionsmischung stufenweise zusetzt.

5. Verwendung von Bismutvanadatpigmenten der Formel I gemäß Anspruch 1 oder 2 zur Einfärbung von Lacken, Druckfarben und Kunststoffen.

## Claims

1. Bismuth vanadate pigments of the general formula I
BiₓEᵥSi_{y}V_{(1-z)}P_{z}O_{w} I
where
x is from 0.8 to 1.2,
y is from 0 to 4,
z is from 0 to 0.2,
v is from >0 to 0.5, and
w is the number of oxygen atoms for satisfying the valence requirements of the cations,
with the following provisos:
a) when y=0, then
z is from >0 to <0.05 and
E is calcium or a mixture of calcium and zinc and/or magnesium in which the molar ratio of calcium to zinc and/or magnesium is ≥ 1,
b) when 0<y<1, then
z is from 0 to 0.2 and
E is calcium or a mixture of calcium and zinc and/or magnesium in which the molar ratio of calcium to zinc and/or magnesium is ≥ 1,
c) when y≥1, then
z is from 0 to 0.2 and
E is zinc, magnesium, calcium, lithium, aluminum or mixtures thereof.

2. Bismuth vanadate pigments of the formula I as claimed in claim 1 wherein
x is from 0.9 to 1.1,
y is from 0 to 2,
z is from 0 to 0.1,
v is from 0.01 to 0.1, and
w is the number of oxygen atoms for satisfying the valence requirements of the cations,
with the following provisos:
a) when y=0, then
z is from 0.002 to 0.05,
b) when 0<y<1, then
z is from 0 to 0.1, and
c) when y>1, then
z is from 0.01 to 0.1 and
E is zinc.

3. A process for preparing bismuth vanadate pigments of the formula I as set forth in claim 1 by mixing of bismuth- and vanadium-containing solutions and subsequent heat treatment of the resulting precipitate, which comprises admixing a stirred alkaline vanadate solution with an acidic bismuth salt solution in the presence of soluble salts of the metals calcium, zinc, magnesium, lithium and/or aluminum and optionally a soluble phosphate and/or silicate, adjusting the mixture with a base to a pH from 3 to 6.5, keeping the pH constant during the heating at up to 100°C by continued addition of base as long as the pH keeps on dropping, then stirring the mixture at that temperature until the pH remains constant on its own, and subsequently isolating the precipitated pigment, washing the isolated pigment salt-free, drying the salt-free pigment and heat-treating the dried pigment at from 300 to 700°C for from 0.5 to 5 hours.

4. A process as claimed in claim 3, wherein the soluble silicate is added to the reaction mixture in stages.

5. The use of bismuth vanadate pigments of the formula I as claimed in claim 1 or 2 for coloring paints, printing inks and plastics.

## Revendications

1. Pigment à base de vanadate de bismuth de formule générale I
BiₓEᵥSi_{y}V_{(1-z)}P_{z}O_{w} I
x 0,8 à 1,2 ;
y 0 à 4 ;
z 0 à 0,2 ;
v > 0 à 0,5 ;
w nombre d'atomes d'oxygène nécessaires en fonction de la valence des cations,
étant spécifié que :
a) lorsque y=0,
z vaut > 0 à < 0,05 et
E représente du calcium ou un mélange de calcium et de zinc et/ou de magnésium, dans lequel le rapport en moles du calcium au zinc et/ou au magnésium est ≥ 1;
b) lorsque 0<y<1,
z vaut de 0 à 0,2 et
E représente du calcium ou un mélange de calcium et de zinc et/ou de magnésium, dans lequel le rapport en moles du calcium au zinc et/ou au magnésium est ≥ 1;
c) lorsque y≥1,
z vaut de 0 à 0,2 et
E représente du zinc, du magnésium, du calcium, du lithium, de l'aluminium ou des mélanges de ceux-ci.

2. Pigment à base de vanadate de bismuth de formule I selon la revendication 1, dans lequel les variables prennent la signification suivante :
x 0,9 à 1,1 ;
y 0 à 2 ;
z 0 à 0,1 ;
v 0,01 à 0,1 ;
w nombre d'atomes d'oxygène nécessaires en fonction de la valence des cations,
étant spécifié que :
a) lorsque y=0,
z vaut 0,002 à 0,05 et
b) lorsque 0<y<1,
z vaut de 0 à 0,1 et
c) lorsque y>1,
z vaut de 0,01 à 0,1 et
E représente du zinc.

3. Procédé de préparation de pigments à base de vanadate de bismuth de formule I selon la revendication 1, par mélange de solutions contenant du bismuth et du vanadium, suivi d'un traitement par la température du précipité formé, caractérisé en ce que l'on mélange sous agitation une solution alcaline de vanadate avec une solution acide de sel de bismuth en présence de sels solubles des métaux calcium, zinc, magnésium, lithium et/ou aluminium et éventuellement d'un silicate et/ou d'un phosphate soluble, on ajuste le pH à 3-6,5 avec une base, on maintient ensuite le pH à une valeur constante par d'autres ajouts de base pendant le chauffage jusqu'à 100°C jusqu'à ce qu'il ne diminue plus, puis on agite le mélange à cette température tant que le pH reste constant de lui-même, on isole ensuite le pigment ayant précipité, on le lave jusqu'à le débarrasser des sels, on le sèche et on le vieillit à 300-700°C pendant 0,5-5 heures.

4. Procédé selon la revendication 3, caractérisé en ce que l'on ajoute le silicate soluble au mélange réactionnel en plusieurs fois.

5. Utilisation de pigments à base de vanadate de bismuth de formule générale I selon la revendication 1 ou 2, pour la coloration de laques, d'encres d'imprimerie et de matières plastiques.
